# EUROPÄISCHE PATENTSCHRIFT

(11) **EP 2 065 602 B1**
(45) Veröffentlichungstag und Bekanntmachung des Hinweises auf die Patenterteilung: **19.01.2011**
(21) Anmeldenummer: 07023255.8
(22) Anmeldetag: 30.11.2007
(51) Int. Cl.: F16C 13/00, B65G 39/09

(54) **Hohlwalze mit Walzenboden**
Hollow roller with end plug
Cylindre creux avec fond de cylindre

(43) Veröffentlichungstag der Anmeldung: 03.06.2009
(73) Patentinhaber: Oskar Dilo Maschinenfabrik KG, 69412 Eberbach (DE)
(72) Erfinder: Leger, Joachim, Dr.-Ing. c/o Oskar Dilo Maschinenfabrik KG, 69412 Eberbach (DE)
(74) Vertreter: Wächter, Jochen

(56) Entgegenhaltungen:
- EP-A- 1 033 335
- DE-A1- 2 504 471
- DE-U1- 20 313 443

## Beschreibung

### Gebiet der Erfindung

Die Erfindung bezieht sich auf eine Hohlwalze mit einem Walzenkörper, der endseitig jeweils von einem in den Walzenkörper passgenau eingesetzten Walzenboden abgeschlossen ist. Eine solche Hohlwalze ist aus DE 203 13 443 U1 bekannt.

Walzen dieser Art unterschiedlichster Durchmesser werden beispielsweise in Krempeln und Karden sowie in Anlagen eingesetzt, in denen bahnförmiges Material zu transportieren und zu verarbeiten ist, insbesondere in Vlieslegern. Solche Walzen werden mitunter mit hohen Drehzahlen betrieben, was es erfordert, dass die Walzen rund laufen. Dieses hat eine sehr präzise Bearbeitung der Walze auf der Drehbank zur Voraussetzung.

### Beschreibung des Standes der Technik

Üblicherweise sind die Walzenböden in den Walzenkörper eingeschweißt und an ihnen die Lagerzapfen angeschweißt, d.h. die Walzen sind einteilige Erzeugnisse, die nach Verschweißung ihrer Bestandteile spanabhebend bearbeitet werden müssen, um den runden Lauf zu garantieren. Bei Walzen großer Durchmesser ist ein entsprechend großer Durchmessersprung zwischen dem Walzenmantel und den Lagerzapfen vorhanden, der auf Drehbänken jedoch nicht rationell hergestellt werden kann. Der kleine Durchmesser der Zapfen kann nämlich nicht mit der notwendigen hohen Schnittgeschwindigkeit abgearbeitet werden, weil wegen des großen Durchmessers der Walzen Drehbänke zum Einsatz kommen, die über keine hohen Schnittgeschwindigkeiten verfügen. Bei langen Walzen besteht zusätzlich die Schwierigkeit, die Walze durch eine Lünette abzustützen, wenn ihre Zapfen spanabhebend bearbeitet werden.

In der o.g. DE 203 13 443 U1 ist eine Hohlwalze beschrieben, die rationeller hergestellt werden kann. Zu diesem Zweck sind der Lagerzapfen und der Walzenboden, an dem der Lagerzapfen befestigt ist, zu einer gesonderten Einheit gemacht, die erst nach Endbearbeitung an dem ebenfalls bereits endbearbeiteten Walzenkörper passgenau angebracht wird. Auf diese Weise ist es möglich, den Lagerzapfen und die mit ihm im Zusammenhang stehenden Teile auf den dazu speziell geeigneten Maschinen herzustellen, bevor der Zusammenbau mit dem Walzenkörper erfolgt, während der Walzenkörper getrennt davon auf Maschinen herstellbar ist, die an die Dimensionen des Walzenkörpers angepasst sind.

Die Sicherung des Walzenbodens im Walzenkörper übernimmt bei der bekannten Konstruktion ein Haltering im Walzenkörper, der zum zugehörigen Walzenende hin durch einen Seegerring gesichert ist, der in einer in der Innenwand des Walzenkörpers ausgebildeten Ringnut sitzt. Der in das Ende des Walzenkörpers eingesteckte Walzenboden ist mittels Schraubbolzen an dem Haltering befestigt.

Es sind auch Hohlwalzen bekannt, bei denen jeder Walzenboden ein Außengewinde und der Walzenkörper ein dazu passendes Innengewinde an seinen Enden aufweist und die Walzenböden mittels dieser Gewinde mit dem Walzenkörper verschraubt sind. Die Herstellung der Innengewinde ist ebenso aufwändig, wie das Abdrehen des Walzenkörpers an seinem Außenumfang.

Die Ausbildung einer Ringnut oder eines Gewindes im inneren Umfang einer Hohlwalze verbietet sich, wenn die Wand der Hohlwalze relativ dünn ist, wie es bei leichtgewichtigen Hohlwalzen der Fall ist, und insbesondere dann, wenn diese aus einem Kunststoffmaterial besteht, weil hierdurch das Material zu sehr geschwächt würde.

### Übersicht über die Erfindung

Der Erfindung liegt daher die Aufgabe zugrunde, eine Hohlwalze der eingangs genannten Art anzugeben, die eine sichere Befestigung des Walzenbodens am Walzenkörper auch bei einem dünnwandig ausgebildeten Walzenkörper erlaubt.

Diese Aufgabe wird durch die im Anspruch 1 angegebene Erfindung gelöst. Vorteilhafte Ausgestaltungen derselben sind Gegenstand der Unteransprüche.

Bei der Erfindung erfolgt die feste Verbindung von Walzenboden und Walzenkörper in axialer Richtung nicht über Formschluss, wie bei der eingangs genannten DE 203 13 443 U1, sondern mittels einer Klebeverbindung über eine Kombination aus Kraftschluss und Formschluss. Eine reine Klebverbindung am Umfang des Walzenbodens mit der Innenwand des Walzenkörpers würde allerdings einen passgenauen Sitz des Walzenbodens im Walzenkörper nicht zulassen, ohne die Gefahr heraufzubeschwören, dass beim Einschieben des Walzenbodens in den Walzenkörper auf diesen oder die Außenfläche des Walzenbodens aufgetragener Klebstoff von den Klebflächen weg geschoben wird. Eine Klebverbindung und ein passgenauer Sitz verbieten sich somit eigentlich gegenseitig. Die Erfindung löst dieses Problem, indem sie einen Walzenboden verwendet, der an seinem Umfang mit wenigstens einer Nut, vorzugsweise einer Spiralnut versehen ist, die vollständig mit Klebstoff gefüllt ist. Der Klebstoff haftet an der Innenwand des Walzenkörpers und erzeugt dort einen Kraftschluss, und er haftet auch an den Wänden der Nut, wo ebenfalls ein Kraftschluss erzeugt wird. Dem überlagert sich noch der Formschluss, den der im Lumen der Nut ausgehärtete Klebstoff mit dem Walzenboden erzeugt.

Durch besondere Maßnahmen lässt sich gewährleisten, dass die Nut im fertig gestellten Zustand der erfindungsgemäßen Hohlwalze vollständig gefüllt ist. Aufgrund der Tatsache, dass im montierten Zustand von Walzenkörper und Walzenboden das Lumen der Nut an seinen beiden Enden eine offene Verbindung nach außen hat, wird es nämlich möglich, in die Nut erst nach dem Einpassen des Walzenbodens in den Walzenkörper durch die eine ihrer Verbindungen nach außen so lange Klebstoff einzupressen, bis dieser an der anderen Verbindung wieder austritt, so dass man sich auf diese Weise davon überzeugen kann, dass die Nut auf ihrer vollen Länge mit Klebstoff gefüllt ist.

Die Nut kann ein- oder mehrgängig sein. Die Verbindung der Nut nach außen kann durch radiale Öffnungen im Mantel des Walzenkörpers oder durch sich axial erstreckende, sich nach außen öffnende Kanäle im Walzenboden hergestellt sein. Jedenfalls muss sichergestellt sein, dass der Klebstoff beim Einpressen in die Nut nicht in den Walzenhohlraum austritt, weil dann eine ordnungsgemäßen Füllung der Nut nicht gewährleistet wäre und durch in den Walzenhohlraum ausgetretenen Klebstoff eine Unwucht der Walze hervorgerufen werden könnte.

Die Verbindung des Lumens der Nut nach außen, die das Einspritzen und Kontrollieren des Einströmens des Klebstoffs in die Nut erlaubt, kann im einfachsten Falle durch radiale Bohrungen im Mantel des Walzenkörpers hindurch erfolgen, die in den Endbereichen der Nut in diese münden. Soll die Oberfläche des Walzenkörpers möglichst unverletzt bleiben, sieht eine Alternative der Erfindung im Walzenkörper für jede Nut wenigstens einen sich achsparallel erstreckenden, blind endenden, sich in die Stirnseite des Walzenbodens öffnenden Kanal vor, der mit dem für ihn bestimmten Ende der Nut durch eine im Wesentlichen radial verlaufende Bohrung verbunden ist. Es können beide Enden des Lumens der Nut durch solche Kanäle mit dem Äußeren verbunden sein, oder auch nur eines derselben, während das andere Ende sich durch eine Bohrung im Mantel des Walzenkörpers nach außen öffnet.

Es versteht sich, dass die Nut eine möglichst größe Fläche des in den Walzenkörper eingepassten Abschnitt des Walzenbodens einnimmt, damit eine ausreichend große Klebfläche am Walzenkörper erzeugt wird. In der Praxis ist es günstig, wenn die Nut wenigstens etwa die Hälfte der Oberfläche des im Walzenkörper sitzenden Abschnitts des Walzenbodens einnimmt.

Die Erfindung wird nachfolgend mit Hilfe der beigefügten Zeichnungen, die bevorzugte Ausführungsformen der Erfindung zeigen, näher erläutert.

### Kurzbeschreibung der Zeichnungen

Fig. 1 zeigt eine erste Ausführungsform eines erfindungsgemäß ausgebildeten Walzenbodens mit Spiralnut von der Seite, bestimmt für Befüllung der Nut durch Bohrungen im Walzenkörper hindurch;
Fig. 2 zeigt eine Axialschnittdarstellung des Endabschnitts einer Hohlwalze mit einem darin eingesteckten Walzenboden nach Fig. 1;
Fig. 3 zeigt eine zweite Ausführungsform eines erfindungsgemäß ausgebildeten Walzenbodens von der Seite, bestimmt für Befüllung der Nut durch den Walzenboden hindurch;
Fig. 4 zeigt eine Axialschnittdarstellung des Endabschnitts einer Hohlwalze mit darin eingestecktem Walzenboden gemäß Fig. 3;
Fig. 5 zeigt eine dritte Ausführungsform eines erfindungsgemäß ausgebildeten Walzenbodens als Variante von Fig. 3 von der Seite;
Fig. 6 zeigt eine vierte Ausführungsform eines erfindungsgemäß ausgebildeten Walzenbodens von der Seite mit mäanderförmig verlaufender Nut, bestimmt für Befüllung der Nut durch den Walzenboden hindurch, und
Fig. 7 zeigt eine fünfte Ausführungsform eines erfindungsgemäß ausgebildeten Walzenbodens mit zwei parallel zueinander verlaufenden Spiralnuten, die an ihren dem Walzenzapfen fernen Enden miteinander verbunden sind.

### Detaillierte Beschreibung der Erfindung

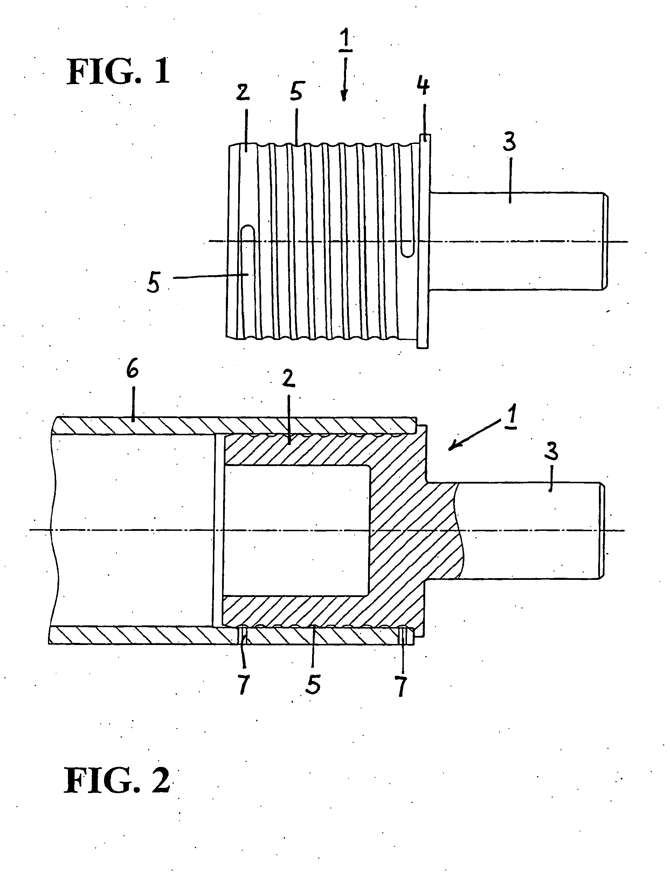

Fig. 1 zeigt eine Seitenansicht einer ersten Ausführungsform eines Walzenbodens, der die Merkmale der vorliegenden Erfindung aufweist. Der insgesamt mit 1 bezeichnete Walzenboden hat einen stopfenförmigen zylindrischen Abschnitt 2 zum Einstecken in einen Walzenkörper und einen damit koaxialen Zapfen 3 zur Lagerung einer mit dem Walzenboden 1 ausgerüsteten Hohlwalze in einem Maschinengestell. Am Übergang zwischen dem stopfenförmigen Abschnitt 2 und dem Zapfen 3 weist der stopfenförmige Abschnitt 2 einen radial vorstehenden Bund 4 auf. Im dargestellten Ausführungsbeispiel ist der Zapfen 3 mit dem stopfenförmigen Abschnitt 2 des Walzenbodens 1 integral vereinigt, es sei jedoch darauf hingewiesen, dass der Zapfen 3 auch als ein gesondertes Teil hergestellt sein kann, das mit dem stopfenförmigen Abschnitt 2 beispielsweise durch Verschraubung fest verbunden ist. Auch kann der stopfenförmige Abschnitt dazu eingerichtet sein, einen Antriebsmotor, beispielsweise einen Drehmomentmotor, in sich aufzunehmen, wobei dann dieser Motor einen Zapfen ersetzt.

Auf seiner Umfangsfläche ist der stopfenförmige Abschnitt 2 mit einer spiralförmig verlaufenden Nut 5 versehen, die hier mehr als die Hälfte der Umfangsfläche des stopfenförmigen Abschnitts 2 einnimmt. An seinem freien Ende ist der stopfenförmige Abschnitt 2 leicht angefast, um das Einstecken des Walzenbodens in den Walzenkörper einer Hohlwalze zu erleichtern.

Fig. 2 zeigt im Axialschnitt das eine Ende einer Hohlwalze, in das ein Walzenboden 1 nach Fig. 1 eingesteckt ist. Die Hohlwalze hat einen Walzenkörper 6, dessen Ende zylindrisch zur Aufnahme des Walzenbodens 1 ausgedreht sein kann. Der Walzenboden 1 ist in den Walzenkörper 6 soweit eingesteckt, dass sein Bund 4 an der Stirnfläche des Walzenkörpers 6 anliegt.

Im Walzenkörper 6 sind zwei radial verlaufende Bohrungen 7 an Stellen ausgebildet, die mit den Enden der Spiralnut 5 fluchten, die am Umfang des stopfenförmigen Abschnitts 2 des Walzenbodens 1 ausgebildet ist. Die Übereinstimmung der Bohrungen 7 mit den Enden der Spiralnut 5 kann entweder mit Hilfe einer Markierung am Walzenboden 1 erfolgen, oder in dem man- sofern möglich - den Walzenboden 1 gegenüber dem Walzenkörper 6 so lange dreht, bis die Bohrungen 7 mit der Nut 5 in Übereinstimmung gebracht sind, wovon man sich durch einen in eine der Bohrungen 7 eingeführten Sondierstift oder durch Einleiten eines fließfähigen Mediums in eine der Bohrungen 7 überzeugen kann.

Der Walzenkörper 6 besteht zur Gewichtsverminderung vorzugsweise aus einem glas- oder kohlefaserverstärken Kunststoff. Zur Gewichtsverminderung ist auch der Walzenboden 1 ausgedreht, wie in Fig. 2 erkennbar ist.

Der Walzenboden 1 ist gemäß Fig. 2 in den Walzenkörper 6 passgenau eingesteckt, wie bereits erwähnt. Um ihn in den Walzenkörper 6 zu sichern, wird das zwischen dem Walzenboden 1 und dem Walzenkörper 6 durch die Nut 5 gebildete Lumen in dem in Fig. 2 dargestellten Zustand der Hohlwalze mit einem Klebstoff gefüllt. Zu diesem Zweck wird in eine der Bohrungen 7 so lange Klebstoff eingepresst, bis er an der anderen Bohrung 7 wieder austritt. Es ist dann sichergestellt, dass das gesamte Lumen von Klebstoff erfüllt ist. Vorzugsweise wird ein Klebstoff eingesetzt, der beim Aushärten nicht oder nur wenig schwindet.

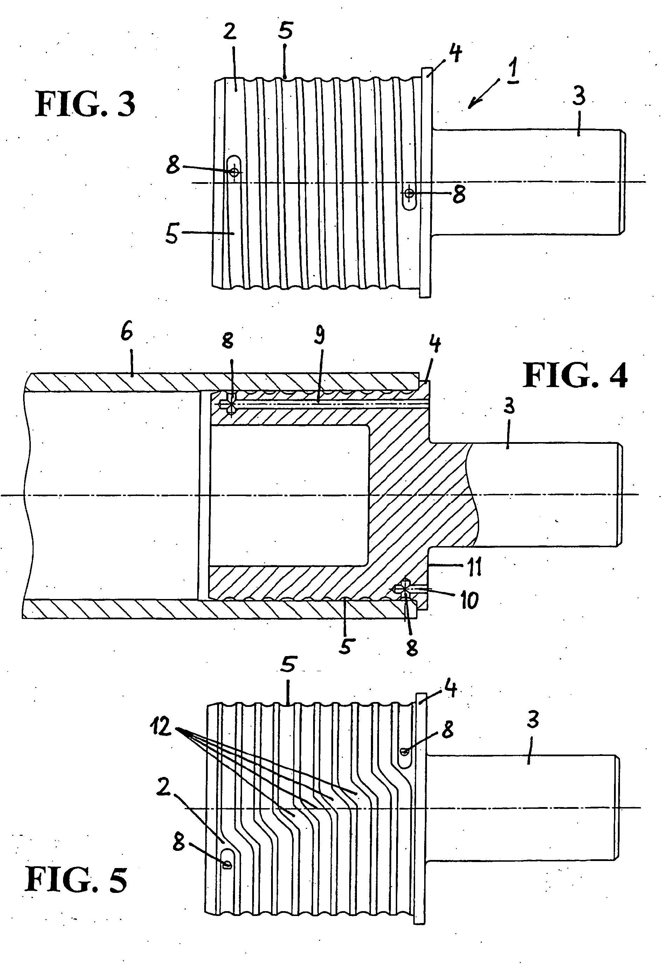

Fig. 3 zeigt einen Walzenboden 1, der ähnlich dem von Fig. 1 ausgebildet ist. Er unterscheidet sich von diesem jedoch dadurch, dass in dem stopfenförmigen Abschnitt 2 im Bereich der Enden der Nut 5 jeweils eine radial verlaufende Bohrung 8 ausgebildet ist. Jede der Bohrungen 8 mündet, wie Fig. 4 zeigt, in eine parallel zur Walzenachse verlaufende Sackbohrung 9 bzw. 10, die sich zur freien Stirnseite 11 des stopfenförmigen Abschnitts 2 öffnet. Man erkennt aus Fig. 4, dass das zwischen dem Walzenkörper 6 und dem Walzenboden 1 durch die Spiralnut 5 gebildete Lumen von außen vollständig mittels eines Klebstoffs gefüllt werden kann, indem dieser in die eine der Sackbohrungen, beispielsweise 9, so lange eingespritzt wird, bis er an der anderen Sackbohrung, im Beispiel 10, wieder austritt. Diese Ausführungsvariante der Erfindung hat den Vorteil, dass die Oberfläche des Walzenkörpers 6 ungebohrt bleiben kann.

Fig. 5 zeigt eine Variante eines Walzenbodens 1, die sich von der nach den Fig. 1 bzw. 3 dadurch unterscheidet, dass die Nut 5 nicht rein spiralförmig in der Oberfläche des stopfenförmigen Abschnitts 2 ausgebildet ist, sondern in zueinander parallelen Radialebenen verläuft, wobei schräg verlaufende Abschnitte 12 die anderen Abschnitte miteinander verbinden. Diese Ausführungsvariante hat den Vorteil, dass die an den Enden der Nut 5 zurückbleiben den Zwickel der Umfangsfläche des stopfenförmigen Abschnitts 2, die nicht von einer Nut durchzogen sind, sehr klein werden. Man erreicht hierdurch eine gleichmäßigere Verteilung der von dem Klebstoff ausgehenden Haltekräfte auf den Walzenkörper 6.

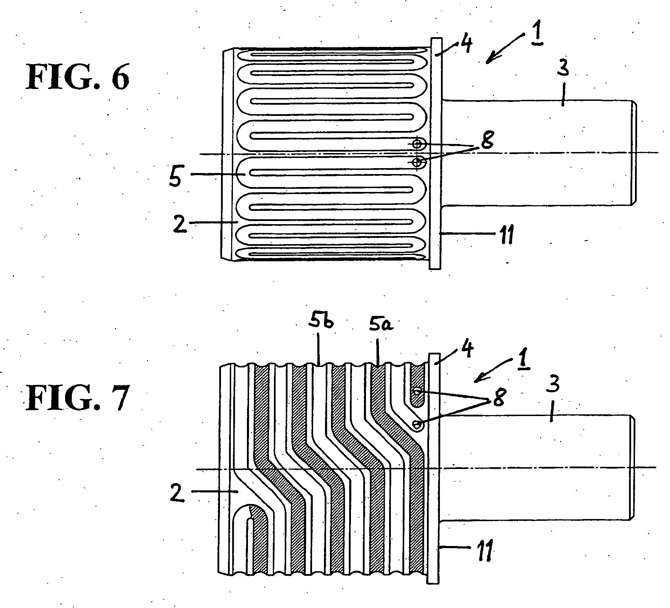

Fig. 6 zeigt eine Ausführungsform der Erfindung, die sich gegenüber jenen der Fig. 1, 3 und 5 dadurch unterscheidet, dass die im Walzenboden 1 ausgebildete Nut 5 nicht im Wesentlichen spiralförmig, sondern mäanderförmig verläuft, wobei die Enden der Nut eng beieinander nahe dem Bund 4 liegen. Die Verbindung nach außen ist im dargestellten Beispiel vergleichbar den der Fig. 3 und 4 über radial verlaufende Bohrungen und achsparallel verlaufende Sackbohrungen (nicht dargestellt) vergleichbar Fig. 4 hergestellt. Die Ausführungsform hat den Vorteil, dass die genannten Sackbohrungen, die in die Stirnfläche 11 münden, sehr kurz ausgeführt sein können, wie die Sackbohrung 10 im Beispiel von Fig. 4. Die mäanderförmig verlaufende Nut 5 verschafft der Ausführungsform nach Fig. 6 gegenüber denen nach den Fig. 1, 3 und 5 den Vorteil, dass das Einschieben des Walzenbodens 1 in den Walzenkörper 6 sehr glatt verläuft und nicht durch quer zur Einschubrichtung verlaufende Stege zwischen Nutgängen gestört werden kann.

Schließlich zeigt Fig. 7 eine Ausführungsform eines Walzenbodens, bei dem in der Umfangsfläche des stopfenförmigen Abschnitts 2 zwei parallel zueinander im Wesentlichen spiralförmig, vergleichbar dem Beispiel von Fig. 5, verlaufende Nuten 5a und 5b ausgebildet sind, die am dem Lagerzapfen 3 abgewandten Ende miteinander verbunden sind und somit eine zusammenhängende Nut bilden, in die vergleichbar dem Beispiel von Fig. 6 am einen Ende Klebstoff eingespritzt werden kann, bis dieser am anderen Ende aus der Nut wieder austritt. In Fig. 7 ist die eine Nut 5a schraffiert dargestellt, um sie gegenüber der parallel verlaufenden zweiten Nut 5b optisch abzuheben. Man könnte im Zusammenhang mit dem Einfüllen des Klebstoffs nach Montage des Walzenbodens 1 im Walzenkörper die eine Nut 5a als hinlaufende Nut und die zweite Nut 5b als rücklaufende Nut bezeichnen.

Es ist auch möglich die Ausführungsarten der Fig. 1 und 2 einerseits und der Fig. 3 und 4 andererseits miteinander zu kombinieren, indem die Nut 5 am einen Ende durch eine in der Umfangsfläche des Walzenkörpers verlaufende Bohrung 7 und am anderen Ende durch eine im Walzenboden verlaufende Bohrung 8 mit achsparalleler Sackbohrung von außen zugänglich ist.

## Patentansprüche

1. Hohlwalze mit einem Walzenkörper (6), der endseitig jeweils von einem in den Walzenkörper (6) passgenau eingesetzten, stopfenartig ausgebildeten Walzenboden (1) zur drehbaren Lagerung der Hohlwalze abgeschlossen ist, **gekennzeichnet durch** die folgenden Merkmale:
der Walzenboden (1) hat an seinem im Walzenkörper (6) sitzenden Umfang wenigstens eine mäandernde oder im Wesentlichen spiralförmig verlaufende Nut (5), deren Lumen zum Hohlraum der Walze hin geschlossen ist, an den Enden der Nut (5) jeweils eine Verbindung (7; 8, 9, 10) nach außen aufweist, und von einem Klebstoff vollständig ausgefüllt ist.

2. Hohlwalze nach Anspruch 1, **dadurch gekennzeichnet, dass** der Walzenboden (1) an seinem im Walzenkörper (6) sitzenden Umfang zwei parallel zueinander im Wesentlichen spiralförmig verlaufende Nuten (5a, 5b) aufweiset, deren Lumina nahe dem dem Walzenhohlraum zugewandten Ende des Walzenbodens (1) miteinander verbunden sind und deren am Walzenende gelegene Enden jeweils eine Verbindung (8, 9, 10) nach außen aufweisen.

3. Hohlwalze nach Anspruch 1 oder 2, **dadurch gekennzeichnet, dass** die Verbindung des Lumens der Nut (5; 5a, 5b) nach außen an seinem am Walzenende gelegenen Ende durch eine Öffnung (9, 10) in der Stirnseite (11) des Walzenbodens (1) geschaffen ist.

4. Hohlwalze nach Anspruch 3, **dadurch gekennzeichnet, dass** die Verbindung des Lumens der Nut (5) nach außen an seinem am Walzenende gelegenen Ende durch einen sich in die Stirnseite (11) des Walzenbodens (1) öffnenden, sich parallel zur Achse des Walzenbodens (1) erstreckenden, zum Walzenhohlraum hin geschlossenen kurzen Kanal (10) geschaffen ist, der mit dem genannten Ende des Lumens durch eine sich im Walzenboden (1) im Wesentlichen radial erstreckende Bohrung (8) verbunden ist.

5. Hohlwalze nach einem der Ansprüche 1 bis 4, **dadurch gekennzeichnet, dass** die Verbindung des Lumens der Nut (5; 5a, 5b) nach außen an seinem dem Walzenhohlraum nahen Ende durch einen sich in die Stirnseite (11) des Walzenbodens (1) öffnenden, sich parallel zur Achse des Walzenbodens (1) erstreckenden, zum Walzenhohlraum hin geschlossenen langen Kanal (9) geschaffen ist, der mit dem genannten Ende des Lumens durch eine sich im Walzenboden (1) im Wesentlichen radial erstreckende Bohrung (8) verbunden ist.

6. Hohlwalze nach Anspruch 1 oder 2, **dadurch gekennzeichnet, dass** die Verbindung des Lumens der Nut (5) nach außen an ihrem am Walzenende gelegenen Ende durch eine Öffnung (7) im Mantel des Walzenkörpers (6) geschaffen ist.

7. Hohlwalze nach Anspruch 1, **dadurch gekennzeichnet, dass** die Verbindung des Lumens der Nut nach außen an ihrem dem Walzenhohlraum nahen Ende durch eine Öffnung (7) im Mantel des Walzenkörpers (6) geschaffen ist.

## Claims

1. Hollow roll comprising a roll body (6) which is closed off at each end by a plug-like roll end piece (1) inserted into the roll body (6) with a precise fit for the rotatable mounting of the hollow roll, **characterised by** the following features:
the roll end piece (1) has at least one meandering or substantially spiral groove (5) on the circumference thereof which fits in the roll body (6), the open channel of which groove is closed off from the cavity of the roll, has a connection (7; 8, 9, 10) to the outside at each end of the groove (5), and is completely filled with an adhesive.

2. Hollow roll according to claim 1, **characterised in that** the roll end piece (1) comprises two parallel, substantially spiral grooves (5a, 5b) on the circumference thereof which fits in the roll body (6), the open channels of which grooves being connected to one another near the end of the roll end piece (1) which faces the roll cavity, and the ends of which grooves situated at the end of the roll each comprising connections (8, 9, 10) to the outside.

3. Hollow roll according to either claim 1 or claim 2, **characterised in that** the open channel of the groove (5; 5a, 5b) is connected to the outside at the end thereof situated at the end of the roll by an opening (9, 10) in the end face (11) of the roll end piece (1).

4. Hollow roll according to claim 3, **characterised in that** the open channel of the groove (5) is connected to the outside at the end thereof situated at the end of the roll by a short passage (10) which opens out into the end face (11) of the roll end piece (1), extends parallel to the axis of the roll end piece (1), is closed off from the roll cavity, and is connected to said end of the groove by a substantially radial bore (8) in the roll end piece (1).

5. Hollow roll according to any one of claims 1 to 4, **characterised in that** the open channel of the groove (5; 5a, 5b) is connected to the outside at the end thereof situated near the roll cavity by a long passage (9) which opens out into an end face (11) of the roll end piece (1), extends parallel to the axis of the roll end piece (1), is closed off from the roll cavity, and is connected to said end of the groove by a substantially radial bore (8) in the roll end piece (1).

6. Hollow roll according to either claim 1 or claim 2, **characterised in that** the open channel of the groove (5) is connected to the outside at the end thereof situated at the end of the roll by an opening (7) in the casing of the roll body (6).

7. Hollow roll according to claim 1, **characterised in that** the open channel of the groove is connected to the outside at the end thereof situated near the roll cavity by an opening (7) in the casing of the roll body (6).

## Revendications

1. Cylindre creux comprenant un corps de cylindre (6), qui est fermé sur chaque côté extrême, pour le montage rotatif du cylindre creux, par un fond de cylindre (1) réalisé en forme de bouchon et monté avec ajustement dans le corps de cylindre (6), **caractérisé par** les caractéristiques suivantes :
le fond de cylindre (1) comporte, sur son pourtour siégeant dans le corps de cylindre (6), au moins une gorge (5) s'étendant en méandre ou essentiellement en spirale, dont le lumen est fermé en direction de l'espace creux du cylindre, présente à chacune des extrémités de la gorge (5) une liaison (7 ; 8, 9, 10) vers l'extérieur, et est rempli totalement d'une colle.

2. Cylindre creux suivant la revendication 1, **caractérisé en ce que** le fond de cylindre (1) présente, sur son pourtour siégeant dans le corps de cylindre (6), deux gorges (5a, 5b) s'étendant parallèlement entre elles essentiellement en forme de spirale, dont les lumens sont reliés entre eux au voisinage de l'extrémité du fond de cylindre (1) tournée vers l'espace creux du cylindre, et dont les extrémités placées sur l'extrémité du cylindre présentent respectivement une liaison (8, 9, 10) vers l'extérieur.

3. Cylindre creux suivant l'une des revendications 1 et 2, **caractérisé en ce que** la liaison du lumen de la gorge (5 ; 5a, 5b) vers l'extérieur est créée, sur son extrémité placée à l'extrémité du cylindre, par une ouverture (9, 10) dans le côté frontal (11) du fond de cylindre (1).

4. Cylindre creux suivant la revendication 3, **caractérisé en ce que** la liaison du lumen de la gorge (5) vers l'extérieur est créée, sur son extrémité placée à l'extrémité du cylindre, par un court canal (10) s'ouvrant dans le côté frontal (11) du fond de cylindre (1), s'étendant parallèlement à l'axe du fond de cylindre (1) et fermé en direction de l'espace creux du cylindre, lequel canal est relié à l'extrémité citée du lumen par un alésage (8), qui s'étend essentiellement dans la direction radiale dans le fond de cylindre (1).

5. Cylindre creux suivant l'une des revendications 1 à 4, **caractérisé en ce que** la liaison du lumen de la gorge (5 ; 5a, 5b) vers l'extérieur est créée, sur son extrémité proche de l'espace creux du cylindre, par un long canal (9) s'ouvrant dans le côté frontal (11) du fond de cylindre (1), s'étendant parallèlement à l'axe du fond de cylindre (1) et fermé en direction de l'espace creux du cylindre, lequel canal est relié à l'extrémité citée du lumen par un alésage (8) qui s'étend essentiellement dans la direction radiale dans le fond de cylindre (1).

6. Cylindre creux suivant l'une des revendications 1 et 2, **caractérisé en ce que** la liaison du lumen de la gorge (5) vers l'extérieur est créée, sur son extrémité placée à l'extrémité du cylindre, par une ouverture (7) dans l'enveloppe du corps de cylindre (6).

7. Cylindre creux suivant la revendication 1, **caractérisé en ce que** la liaison du lumen de la gorge vers l'extérieur est créée, sur son extrémité proche de l'espace creux du cylindre, par une ouverture (7) dans l'enveloppe du corps de cylindre (6).
